# EUROPÄISCHE PATENTSCHRIFT

(11) **EP 3 266 718 B1**
(45) Veröffentlichungstag und Bekanntmachung des Hinweises auf die Patenterteilung: **25.07.2018**
(21) Anmeldenummer: 16178561.3
(22) Anmeldetag: 08.07.2016
(51) Int. Cl.: B65B 35/52, B65G 57/30, B65G 47/08, B65B 35/36, B65B 35/38

(54) **VERPACKUNGSMASCHINE MIT EINER ZWISCHENABLAGEEINRICHTUNG FÜR VERPACKTE PHARMAZEUTISCHE ERZEUGNISSE**
PACKAGING MACHINE INCLUDING A TEMPORARY STORAGE UNIT FOR PACKED MEDICAL GOODS
MACHINE D'EMBALLAGE COMPRENANT UN DISPOSITIF DE STOCKAGE TEMPORAIRE POUR DES PRODUITS PHARMACEUTIQUES EMBALLÉS

(43) Veröffentlichungstag der Anmeldung: 10.01.2018
(73) Patentinhaber: Mediseal GmbH, 33758 Schloß Holte-Stukenbrock (DE)
(72) Erfinder: Lücke, Joachim, 33689 Bielefeld (DE); Schlenkermann, Hendrik, 33619 Bielefeld (DE)
(74) Vertreter: REHBERG HÜPPE + PARTNER

(56) Entgegenhaltungen:
- EP-A1- 0 337 958
- EP-A1- 1 164 099
- DE-A1- 2 920 611
- DE-A1-102009 022 820
- DE-C1- 19 841 508
- US-A- 2 744 369

## Beschreibung

Die Erfindung betrifft eine Verpackungsmaschine für Produkte, die als in Primärverpackungen enthaltene pharmazeutische Erzeugnisse ausgebildet sind. Die Verpackungsmaschine weist eine getaktet angetriebene erste Fördereinrichtung auf, mit der vereinzelte Produkte gefördert werden. Aus den Produkten werden Stapel gebildet. Stromabwärts der ersten Fördereinrichtung ist eine kontinuierlich angetriebene zweite Fördereinrichtung angeordnet, mit der die Stapel von Produkten gefördert werden.

Derartige Maschinen dienen zum Verpacken solcher Produkte in einer Sekundärverpackung, insbesondere einer Faltschachtel. Bei den pharmazeutischen Erzeugnissen handelt es sich insbesondere um Tabletten, Kapseln, Pillen, Spritzen, Ampullen, Fläschchen, pulverförmige oder flüssige Arzneimittel. Bei den Primärverpackungen handelt es sich insbesondere Blisterverpackungen, bei denen sich die Erzeugnisse in den Höfen der Blisterverpackungen befinden. Die Blisterverpackung ist durch eine Deckelfolie verschlossen. Die fertige Einheit aus der Blisterverpackung und den darin verpackten Erzeugnisse wird als Blisterstreifen oder Blister bezeichnet. Die Primärverpackungen können aber auch als Trays, Sticks, Sachets oder andere geeignete Verpackungen ausgebildet sein.

Eine Verpackungsmaschine für Produkte, die als in Primärverpackungen enthaltene pharmazeutische Erzeugnisse ausgebildet sind, ist aus der deutschen Patentanmeldung DE 10 2009 022 820A1 bekannt. Die Verpackungsmaschine dient insbesondere zum Verpacken von Stapel von Blisterstreifen in Faltschachteln. Die Verpackungsmaschine weist eine getaktet angetriebene erste Fördereinrichtung auf, mit der vereinzelte Produkte gefördert werden. Stromabwärts der ersten Fördereinrichtung ist eine zweite Fördereinrichtung angeordnet, die kontinuierliche angetrieben ist und mit der Stapel von Produkten gefördert werden. Zum Verbringen der Produkte von der getakteten ersten Fördereinrichtung auf die kontinuierlich angetriebene zweite Fördereinrichtung sind zwei jeweils als Unterdrucksaugerarm ausgebildete Übergabevorrichtungen vorhanden. Die Übergabevorrichtungen entnehmen abwechselnd Produkte von der ersten Fördereinrichtung und legen diese auf der zweiten Fördereinrichtung ab.

Eine weitere Verpackungsmaschine für Produkte, die als in Primärverpackungen enthaltene pharmazeutische Erzeugnisse ausgebildet sind, ist aus der europäischen Patentanmeldung EP 1 164 099 A1 bekannt. Die Verpackungsmaschine dient insbesondere zum Verpacken von Stapel von Blisterstreifen in Faltschachteln. Die Verpackungsmaschine weist eine kontinuierlich angetriebene erste Fördereinrichtung auf, mit der vereinzelte Produkte gefördert werden. Stromabwärts der ersten Fördereinrichtung ist eine zweite Fördereinrichtung angeordnet, die ebenfalls kontinuierlich angetrieben ist. Mit der zweiten Fördereinrichtung werden Stapel von Produkten gefördert. Die Verpackungsmaschine weist weiterhin eine als Unterdrucksaugerarm ausgebildete Übergabevorrichtung auf, mit der Produkte von der ersten Fördereinrichtung entnommen und auf der zweiten Fördereinrichtung abgelegt werden.

Aus der europäischen Patentanmeldung EP 0 337 958 A1 ist eine Verpackungsmaschine für Produkte, die als in Primärverpackungen enthaltene pharmazeutische Erzeugnisse ausgebildet sind, bekannt. Die Verpackungsmaschine weist eine getaktet angetriebene erste Fördereinrichtung auf, mit der vereinzelte Produkte gefördert werden. Stromabwärts der ersten Fördereinrichtung ist eine als vertikaler Schacht ausgebildete Stapelbildungseinrichtung angeordnet. Mit der Stapelbildungseinrichtung werden die Stapel von Produkten gebildet und getaktet nach oben weiterbewegt. Von der Stapelbildungseinrichtung werden die Stapel von Produkten auf eine nicht dargestellte zweite Fördereinrichtung übergeben, von der diese Stapel einer Kartoniermaschine zugeführt werden.

Aus dem deutschen Patent DE 198 41 508 C1 ist eine Verpackungsmaschine für Produkte, die als in Primärverpackungen enthaltene pharmazeutische Erzeugnisse ausgebildet sind, bekannt. Die Verpackungsmaschine weist eine getaktet angetriebene erste Fördereinrichtung auf, mit der vereinzelte Produkte gefördert werden. Die Produkte werden mittels einer Übergabevorrichtung an eine zweite Fördereinrichtung zur Bildung von Stapeln von Produkten übergeben. Die zweite Fördereinrichtung ist dabei getaktet angetrieben.

Der Erfindung liegt die Aufgabe zugrunde, eine Verpackungsmaschine für Produkte, die als in Primärverpackungen enthaltene pharmazeutische Erzeugnisse ausgebildet sind, bereitzustellen, die eine effektive Stapelbildung auf einer kontinuierlich angetriebenen zweiten Fördereinrichtung auch dann ermöglicht, wenn die vereinzelten Produkte mittels einer stromaufwärts angeordneten ersten Fördereinrichtung getaktet zugeführt werden und Störungen im Produktstrom auftreten.

Die Aufgabe der Erfindung wird erfindungsgemäß mit den Merkmalen der unabhängigen Patentansprüche 1 und 15 gelöst.

Weitere bevorzugte erfindungsgemäße Ausgestaltungen sind den abhängigen Patentansprüchen zu entnehmen.

Die Erfindung betrifft eine Verpackungsmaschine für Produkte, die als in Primärverpackungen enthaltene pharmazeutische Erzeugnisse ausgebildet sind.

Die Verpackungsmaschine weist eine getaktet angetriebene erste einbahnige oder mehrbahnige Fördereinrichtung auf, mit der vereinzelte Produkte gefördert werden. Die Produkte gelangen von dort direkt in eine Zwischenablageeinrichtung. Von dort werden sie mittels einer Übergabevorrichtung entnommen und zur Bildung von Stapeln auf einer zweiten Fördereinrichtung abgelegt. Die zweite Fördereinrichtung ist also stromabwärts der ersten Fördereinrichtung angeordnet. Die zweite Fördereinrichtung ist kontinuierlich angetrieben und dient zum Weiterfördern der Stapel von Produkten. Die Stapel werden dann in Sekundärverpackungen eingebracht.

Die neue Zwischenablageeinrichtung erreicht in geschickter Weise eine Entkopplung der an sich gegensätzlichen Förderprinzipien der getakteten ersten Fördereinrichtung und der stromabwärts angeordnete kontinuierlich angetriebenen zweiten Fördereinrichtung. Hierdurch ist es beispielsweise möglich, den ordnungsgemäßen Materialfluss mit nur einer Übergabevorrichtung zu realisieren, während bei einer ähnlichen Konstellation im Stand der Technik zwei Übergabevorrichtungen benötigt werden. Die Zwischenablageeinrichtung kann auch als Puffereinrichtung bezeichnet werden.

Eine besondere Rolle spielt dabei der Einfluss fehlerhafter Produkte auf den Materialfluss. Bei der erfindungsgemäßen Verpackungsmaschine werden vorzugsweise fehlerhafte Produkte bereits durch eine vor dem beschriebenen Teil der Verpackungsmaschine angeordnete Aussortiereinrichtung aus dem Materialfluss entfernt und gelangen somit nicht auf die erste Fördereinrichtung. Die erste Fördereinrichtung wird also in diesem Fall nur weiter getaktet, wenn ein ordnungsgemäßes Produkt auf ihr abgelegt wurde. Auf der ersten Fördereinrichtung - die auch als Zuführförderer bezeichnet werden kann - befinden sich dann also nur ordnungsgemäße Produkte ohne Lücken im Produktstrom.

Die Produkte werden vorzugsweise erst dann der Zwischenablageeinrichtung zugeführt, wenn die Reihe der vereinzelt auf der ersten Fördereinrichtung angeordneten Produkte vollständig ist. Somit gelangt immer ein vollständiger Satz ordnungsgemäßer Produkte in die Zwischenablageeinrichtung. Daraus ergibt sich, dass die Anzahl der Produkte eines Satzes gleich der Anzahl an gleichzeitig aufgebauten Stapel auf der zweiten Fördereinrichtung ist.

Unter dem "vereinzelten" Fördern der Produkte ist in dieser Anmeldung im üblichen technischen Sinn zu verstehen, dass die Produkte beim Fördern voneinander separiert sind, also insbesondere nicht Stapel bilden oder als ungeordneter Haufen vorliegen.

Unter "pharmazeutischen Erzeugnissen" sind in dieser Anmeldung nicht nur Arzneimittel, sondern auch Medizinprodukte und Nahrungsergänzungsmittel zu verstehen.

Die Zwischenablageeinrichtung kann oberhalb der ersten Fördereinrichtung angeordnet sein. Hierdurch wird der für die Verpackungsmaschine benötigte Raum längenmäßig nicht verändert. Die Verpackungsmaschine weist also trotz der zusätzlichen Zwischenablageeinrichtung weiterhin kompakte Abmaße auf.

Die Zwischenablageeinrichtung kann eine Hubvorrichtung aufweisen, mit der Produkte von der ersten Fördereinrichtung nach oben transportiert werden. Die Hubvorrichtung kann Fingerelemente aufweisen, die an gegenüberliegenden Seiten eines Produkts angreifen und dieses um einen Weg anheben, der mindestens der Höhe des Produkts entspricht. Der Weg kann insbesondere der Höhe des Produkts plus zwischen etwa 5 mm und 50 mm entsprechen. In dieser Weise wird sichergestellt, dass die anderen Produkte auf der ersten Förderereinrichtung darunter nicht mit den angehobenen Produkten kollidieren. Die Bewegung der Hubvorrichtung erfolgt insbesondere getaktet. Die gesamte Bewegung der Produkte auf der ersten Fördereinrichtung und durch die Zwischenablageeinrichtung erfolgt insbesondere getaktet.

Die Übergabevorrichtung verfährt im Wesentlichen diskontinuierlich mit einer kurzzeitigen Synchronisierung zur Geschwindigkeit der zweiten Fördereinrichtung. Erst die Bewegung auf der zweiten Fördereinrichtung ist dann nicht getaktet und zumindest im Wesentlichen kontinuierlich.

Die Fingerelemente können so ausgebildet und angeordnet sein, dass sie die Produkte bezüglich ihrer Position zueinander in mindestens einer Raumrichtung ausrichten. Dadurch werden die Produkte der Übergabevorrichtung geordneter bereitstellt.

Anstelle der Fingerelemente können auch andere geeignete Mittel zum Anheben der Produkte aus den Produktaufnahmen der ersten Fördereinrichtung vorhanden sein. Dabei könnte es sich beispielsweise um Stempel handeln, die die Produkte hochdrücken und in die Zwischenablageeinrichtung befördern.

Die Verpackungsmaschine kann zwei getaktet angetriebene erste Fördereinrichtungen aufweisen. Diese können insbesondere unabhängig voneinander angetrieben sein. Es ist auch möglich, eine größere Anzahl erster Fördereinrichtungen, beispielsweise drei, vier, fünf oder mehr Fördereinrichtungen, vorzusehen. Mittels der mehreren ersten Fördereinrichtungen kann somit die Anzahl der pro Zeiteinheit bereitgestellten Produkte erhöht werden. Durch den unabhängigen Antrieb wird sichergestellt, dass Verzögerungen aufgrund fehlerhafter Produkte nur Einfluss auf den Durchsatz der jeweils betroffenen Fördereinrichtung haben.

Die Zwischenablageeinrichtung kann eine erste Bahn und eine zweite Bahn aufweisen, wobei die erste Bahn der einen ersten Fördereinrichtung und die zweite Bahn der anderen ersten Fördereinrichtung zugeordnet ist. Wenn mehr als zwei erste Fördereinrichtungen vorhanden sind, versteht es sich, dass die Zwischenablageeinrichtung eine entsprechend höhere Anzahl von Bahnen aufweist. In dieser Weise können also die mehreren Bahnen der Zwischenablageeinrichtung unabhängig voneinander mit Produkten von der jeweils zugeordneten ersten Fördereinrichtung bestückt und der Durchsatz weiter erhöht werden.

Die Verpackungsmaschine kann eine Mehrzahl von Übergabevorrichtungen aufweisen. Durch die besondere Entkopplung der getakteten ersten Fördereinrichtung von der ungetakteten zweiten Fördereinrichtung durch die Zwischenablageeinrichtung ist es aber möglich, mit nur genau einer Übergabevorrichtung auszukommen. Hierdurch ist der apparative und regelungstechnische Aufwand reduziert.

Die Zwischenablageeinrichtung kann unmittelbar im Anschluss an die erste Fördereinrichtung stromabwärts angeordnet sein. Anders gesagt ist die erste Fördereinrichtung als die getaktete Fördereinrichtung zu verstehen, die unmittelbar stromaufwärts der Zwischenablageeinrichtung angeordnet ist. Mögliche andere Fördereinrichtung stromaufwärts sind nicht als die erste Fördereinrichtung zu verstehen.

Die zweite Fördereinrichtung kann als Stapelbildungseinrichtung zur Bildung von Produktstapeln mit mindestens zwei Produkten, aber auch zwecks Erhöhung der Flexibilität für den Betrieb mit einzelnen Produkten ausgebildet sein. Die Stapel können auch drei, vier, fünf oder sechs Produkte oder bis zu zwölf Produkte oder mehr aufweisen.

In der Zwischenablageeinrichtung ist üblicherweise eine Mehrzahl von Produkten nebeneinander und/oder voreinander bzw. hintereinander angeordnet.

Die Übergabevorrichtung kann einen Unterdrucksaugerarm mit einer Mehrzahl von Unterdrucksaugern aufweisen. Hierdurch können die Produkte sicher und flexibel ergriffen und definiert losgelassen und abgelegt werden. Der Unterdrucksaugerarm ist insbesondere so ausgebildet, dass er eine Reihe von zwischen vier und zehn Produkten oder mehr gleichzeitig greifen kann.

Die Übergabevorrichtung kann als Roboter mit einer dreiachsigen Bewegungsbahn ausgebildet sein. Hierdurch kann der Übergang von der getakteten Zwischenablageeinrichtung zu der ungetakteten zweiten Fördereinrichtung - die auch als Abfuhrförderer bezeichnet werden kann - gut realisiert werden. Der Roboter folgt der kontinuierlichen linearen Bewegung des Abfuhrförderers und legt die Produkte sicher auf diesem ab.

Die Verpackungsmaschine kann insbesondere als Blisterstreifenverpackungsmaschine ausgebildet sein. In diesem Fall handelt es sich also bei den Primärverpackungen um Blisterverpackungen. In den Höfen der Blisterverpackungen sind die pharmazeutischen Erzeugnisse angeordnet. Die Blisterverpackung ist in bekannter Weise durch eine Deckelfolie verschlossen. Die fertige Einheit aus der Blisterverpackung und den darin verpackten Produkten wird als Blisterstreifen bezeichnet. Die Primärverpackungen können aber auch als Trays, Sticks, Sachets oder andere Primärverpackungen ausgebildet sein. Bei Trays handelt es sich insbesondere um ausgestanzte und gefaltete Pappteile, in die die pharmazeutischen Erzeugnisse - beispielsweise Ampullen oder Fertigspritzen - eingelegt werden. Solche Trays weisen also keine Deckelfolie auf.

Durch die Zwischenablageeinrichtung wird die Taktzeit vorteilhafterweise von einer Einzeltaktung in eine Mehrfachtaktung geändert. Dies trifft insbesondere bei einer mehrbahnigen Ausbildung der Zwischenablageeinrichtung zu. Während die ersten Fördereinrichtungen die Produkte im Einzeltakt fördern, wird die Taktgeschwindigkeit im weiteren Verlauf durch die gleichzeitige Handhabung mehrerer Produkte reduziert und an die Taktung der Übergabevorrichtung angepasst. Hierdurch wird der Förderprozess gezielt entkoppelt, so dass die Übergabevorrichtung begrenzt unabhängig von der Taktung der ersten Fördereinrichtungen ist.

Die (eine oder mehrere) erste Fördereinrichtung wird insbesondere nur dann weiter getaktet, wenn ein ordnungsgemäßes Produkt auf ihr abgelegt wurde. Auch die Hubvorrichtung wird nur dann betätigt, wenn die Reihe von Produkten vollständig ist. Erst dann wird diese vollständige Reihe von Produkten in die Zwischenablageeinrichtung verbracht.

Die Verpackungsmaschine kann weiterhin eine Speichervorrichtung für die Produkte aufweisen. Diese Speichervorrichtung ist insbesondere im Bereich der ersten Fördereinrichtung angeordnet. Sie dient dazu, aufgrund fehlerhafter Produkte nicht belegte Produktaufnahmen der ersten Fördereinrichtung mit ordnungsgemäßen Produkten zu bestücken. Somit kann der Takt der ersten Fördereinrichtung unverändert fortgesetzt werden, auch wenn fehlerhafte Produkte auftreten.

Die Speichervorrichtung kann oberhalb der ersten Fördereinrichtung angeordnet sein. Die Speichervorrichtung kann manuell oder automatisch mit Produkten befüllbar und zum Zuführen der Produkte in Produktaufnahmen der ersten Fördereinrichtung ausgebildet sein. Hierfür kann die erste Fördereinrichtung auch bei nicht befüllten Produktaufnahmen weitergetaktet werden. Diese unvollständig befüllten Produktaufnahmen werden stromabwärts durch die Speichervorrichtung befüllt.

Die Erfindung betrifft weiterhin ein automatisiertes maschinelles Verfahren zum Verpacken von Produkten, die als in Primärverpackungen enthaltene pharmazeutische Erzeugnisse ausgebildet sind, in Sekundärverpackungen, insbesondere Faltschachteln. Das Verfahren kann insbesondere durch die oberhalb beschriebene Verpackungsmaschine ausgeführt werden, so dass diesbezüglich vollumfänglich auf die oberhalb angegebenen Ausführungen verwiesen wird.

Das Verfahren weist die folgenden Schritte in der angegebenen Reihenfolge auf, wobei es sich versteht, dass noch andere Schritte vor, zwischen und nach den angegebenen Schritten erfolgen können:- Fördern vereinzelter Produkte mit einer getaktet angetriebenen ersten Fördereinrichtung,- Entnehmen der Produkte von der ersten Fördereinrichtung mittels einer Hubvorrichtung einer Zwischenablagereinrichtung zum Ablegen der Produkte in der Zwischenablageeinrichtung,
- Entnehmen der Produkte aus der Zwischenablageeinrichtung mittels einer Übergabevorrichtung,
- Ablegen der Produkte auf einer kontinuierlich angetriebenen zweiten Fördereinrichtung zur Bildung von Stapeln von Produkten, und
- Einbringen der Stapel von Produkten in Sekundärverpackungen, insbesondere Faltschachteln

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Zwischenablageeinrichtung die Rede ist, ist dies so zu verstehen, dass genau eine Zwischenablageeinrichtung, zwei Zwischenablageeinrichtungen oder mehr Zwischenablageeinrichtungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

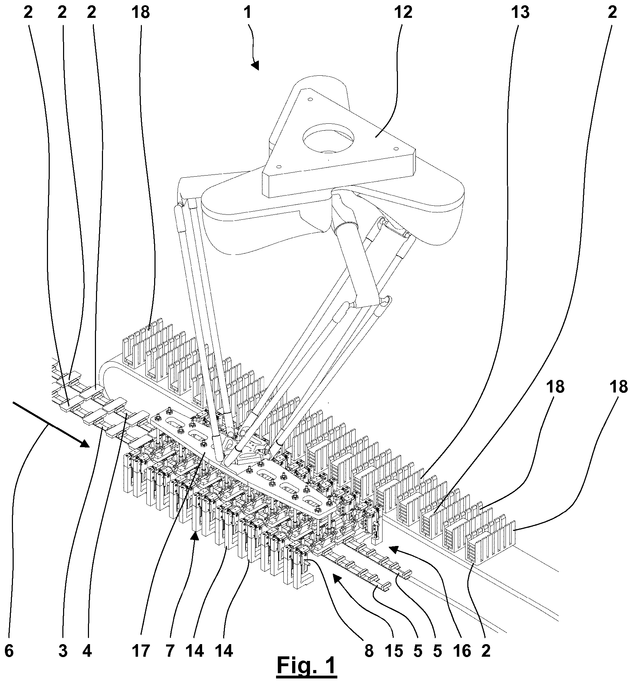

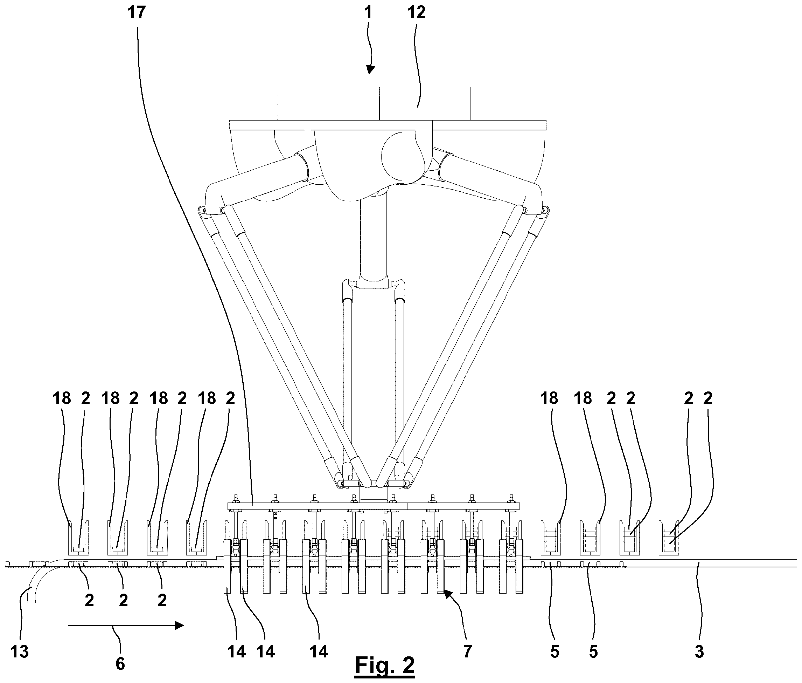

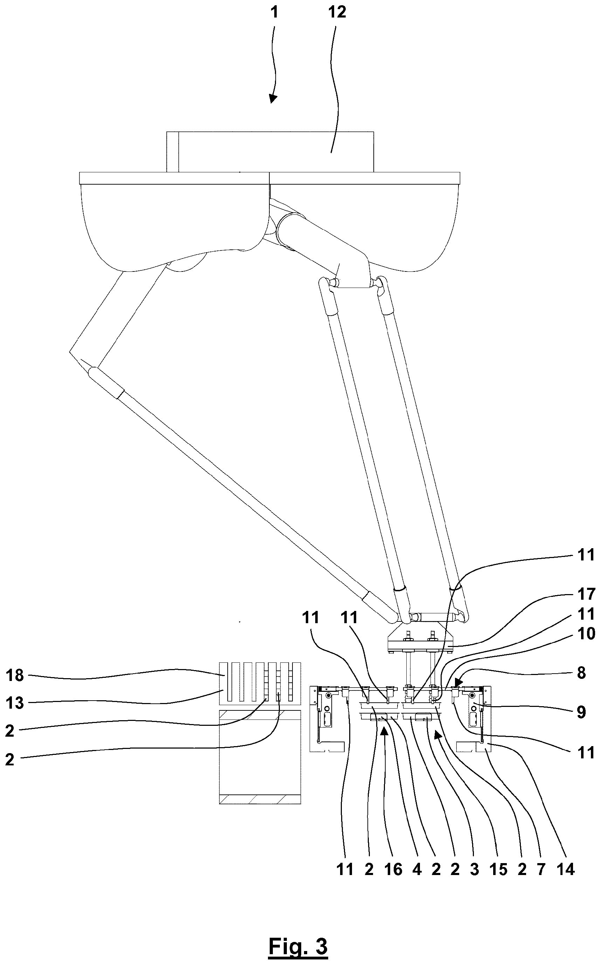

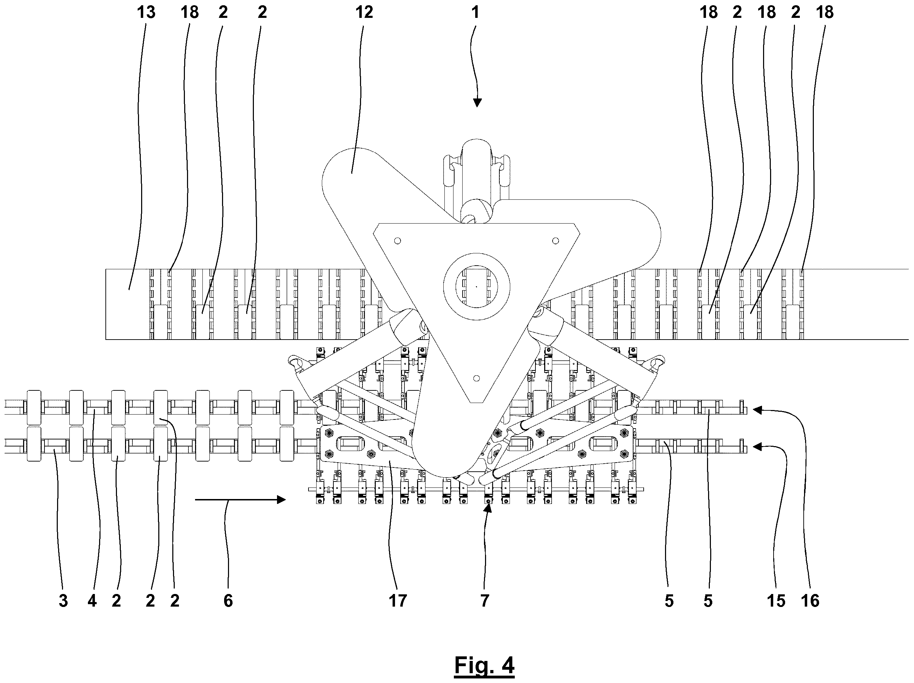

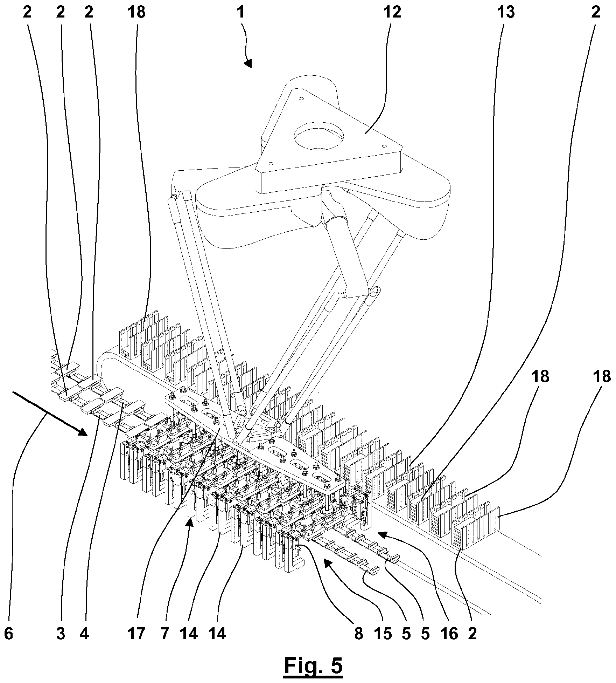

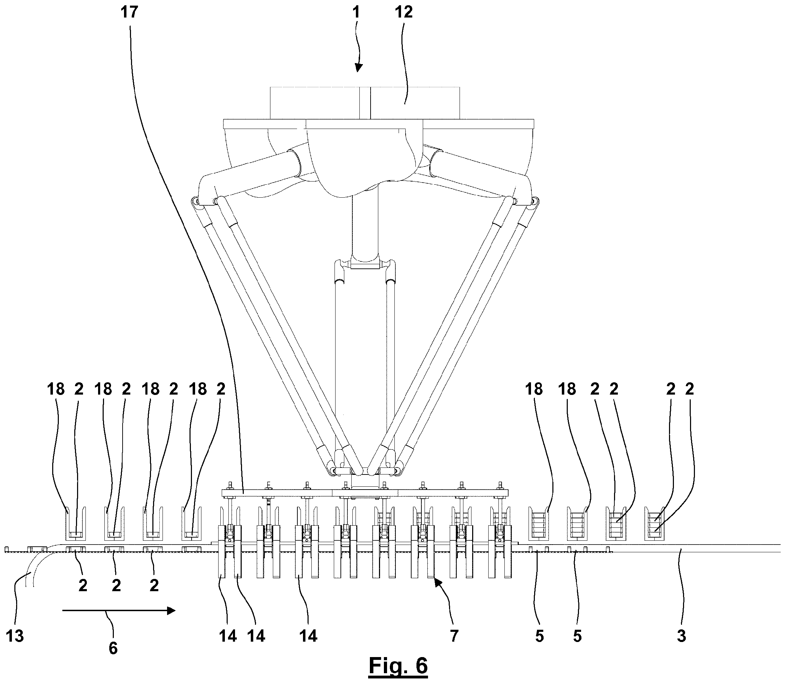

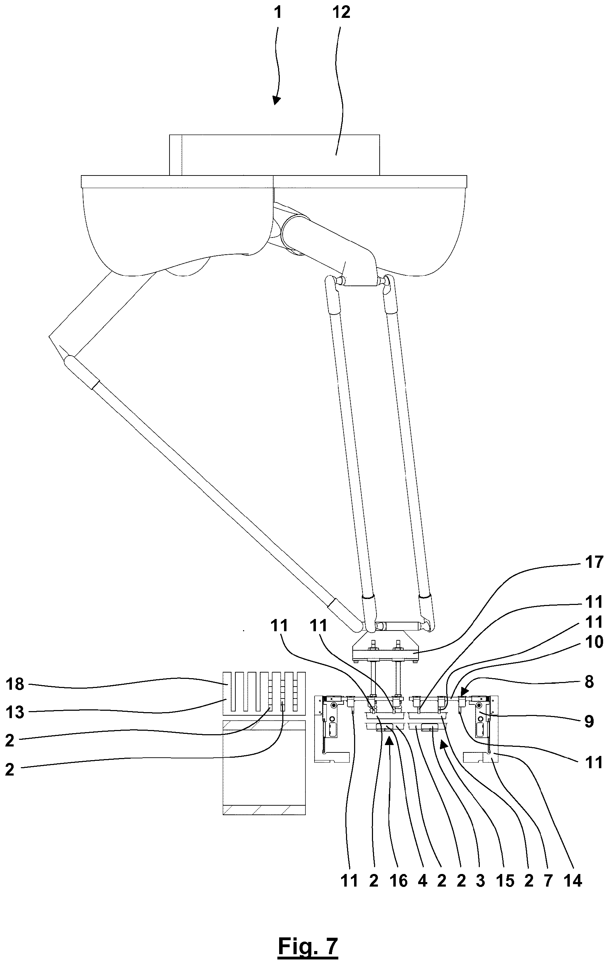

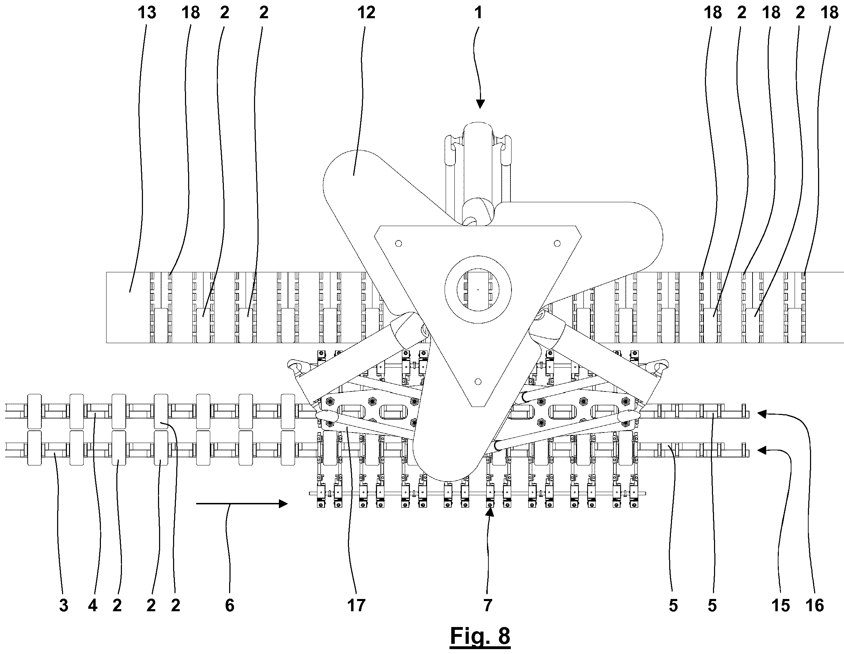

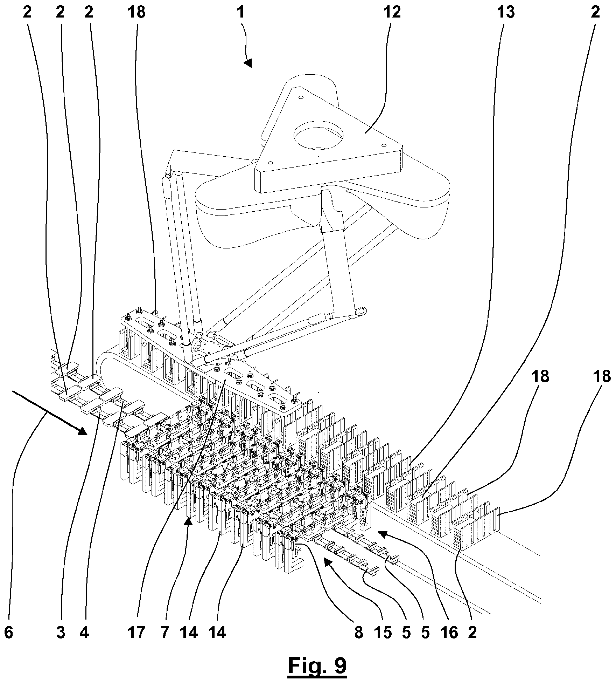

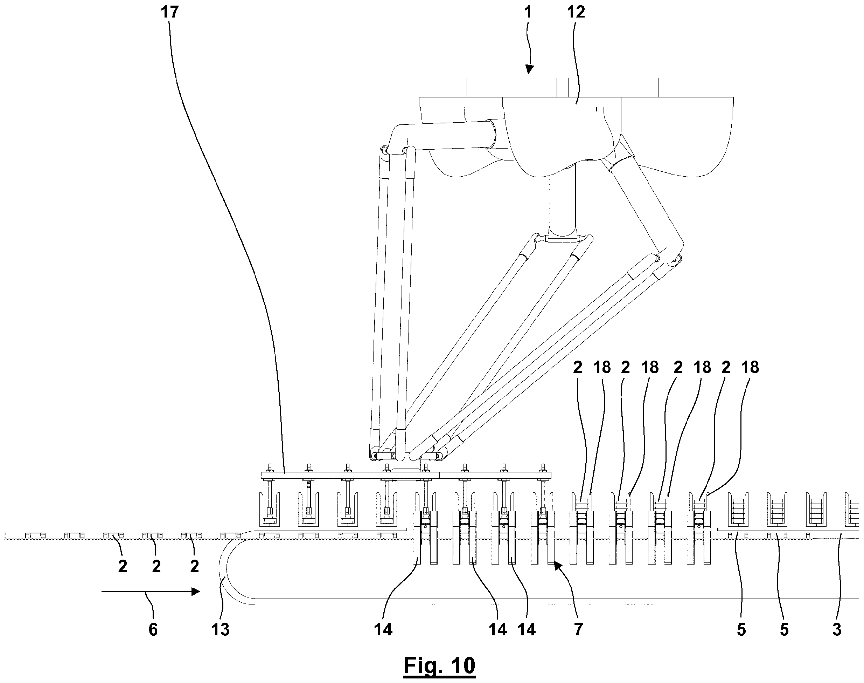

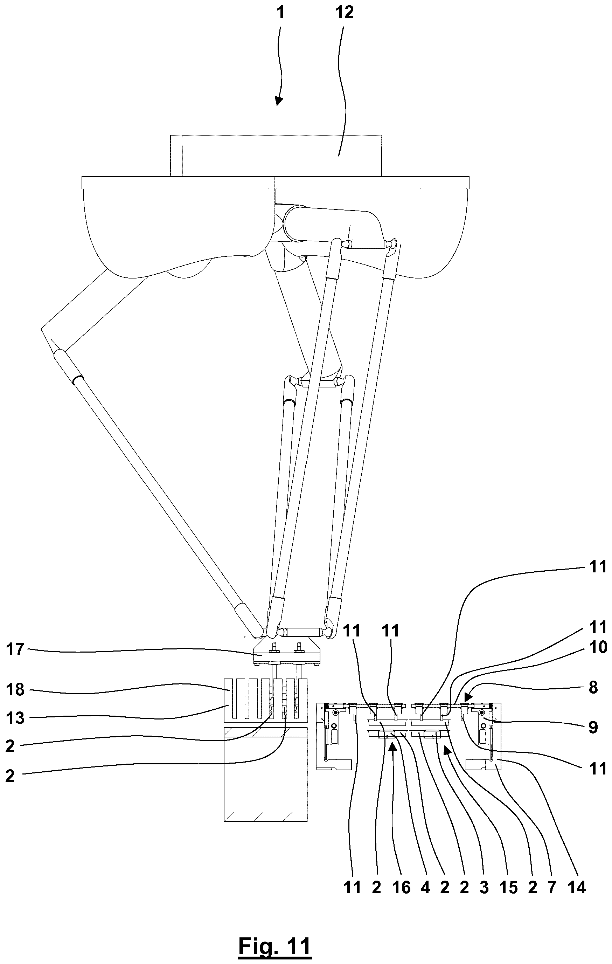

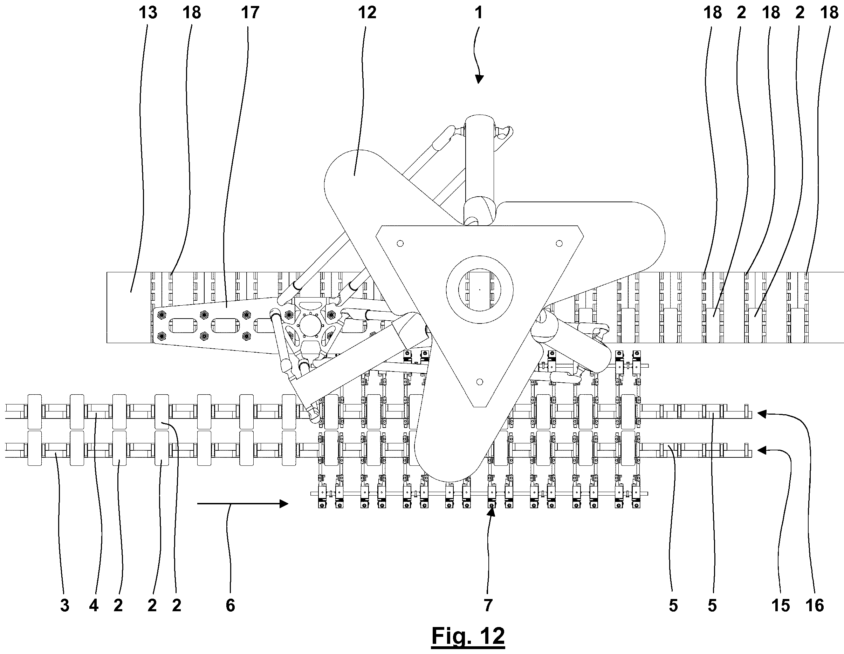

Im Folgenden wird die Erfindung anhand in den Figuren dargestellter bevorzugter Ausführungsbeispiele weiter erläutert und beschrieben. **Fig. 1** zeigt eine perspektivische Ansicht einer beispielhaften Ausführungsform der neuen Verpackungsmaschine in einer ersten Aufnahmestellung der Übergabevorrichtung. **Fig. 2** zeigt eine Seitenansicht der Vorrichtung gemäß Fig. 1. **Fig. 3** zeigt eine Schnittansicht der Vorrichtung gemäß Fig. 1. **Fig. 4** zeigt eine Ansicht von oben der Vorrichtung gemäß Fig. 1. **Fig. 5** zeigt eine perspektivische Ansicht einer beispielhaften Ausführungsform der neuen Verpackungsmaschine in einer zweiten Aufnahmestellung der Übergabevorrichtung. **Fig. 6** zeigt eine Seitenansicht der Vorrichtung gemäß Fig. 5. **Fig. 7** zeigt eine Schnittansicht der Vorrichtung gemäß Fig. 5. **Fig. 8** zeigt eine Ansicht von oben der Vorrichtung gemäß Fig. 5. **Fig. 9** zeigt eine perspektivische Ansicht einer beispielhaften Ausführungsform der neuen Verpackungsmaschine in einer ersten Ablegestellung der Übergabevorrichtung. **Fig. 10** zeigt eine Seitenansicht der Vorrichtung gemäß Fig. 9. **Fig. 11** zeigt eine Schnittansicht der Vorrichtung gemäß Fig. 9. **Fig. 12** zeigt eine Ansicht von oben der Vorrichtung gemäß Fig. 9.

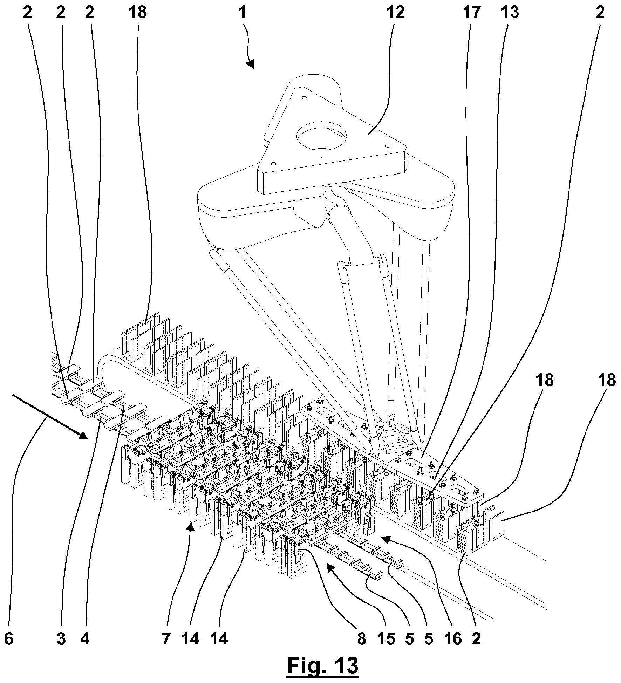

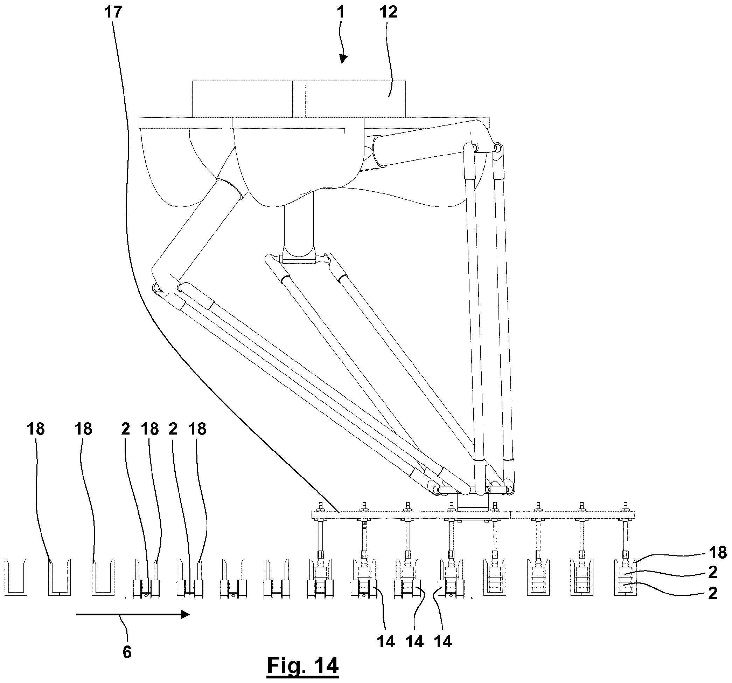

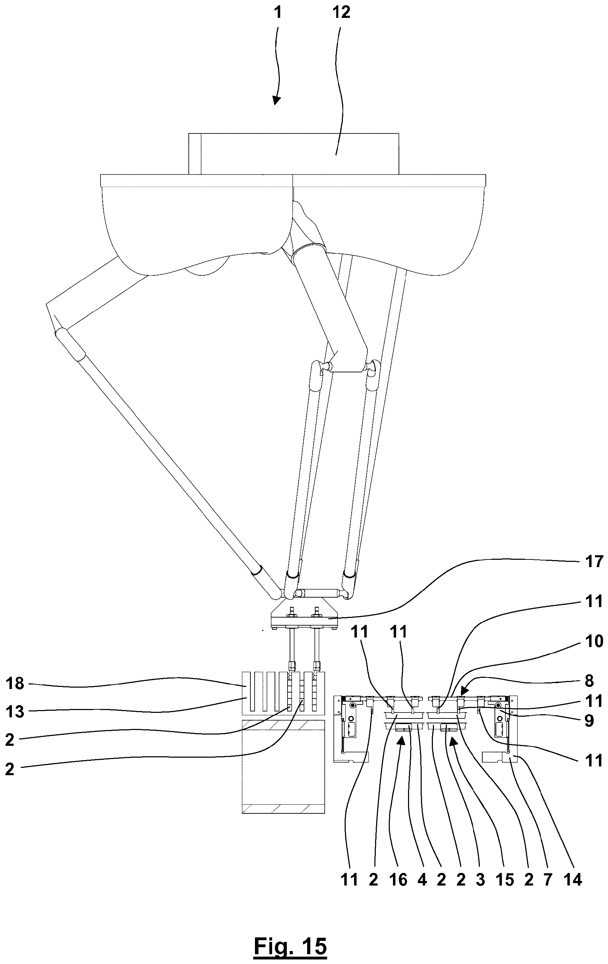

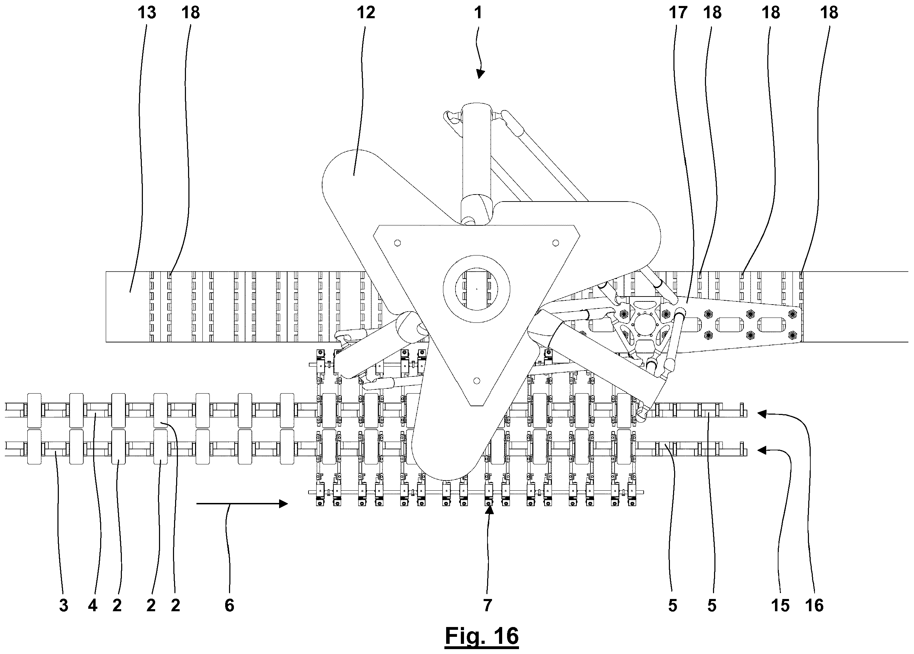

**Fig. 13** zeigt eine perspektivische Ansicht einer beispielhaften Ausführungsform der neuen Verpackungsmaschine in einer zweiten Ablegestellung der Übergabevorrichtung. **Fig. 14** zeigt eine Seitenansicht der Vorrichtung gemäß Fig. 13. **Fig. 15** zeigt eine Schnittansicht der Vorrichtung gemäß Fig. 13. **Fig. 16** zeigt eine Ansicht von oben der Vorrichtung gemäß Fig. 13.

**Fig. 1-4** zeigen verschiedene Ansichten einer beispielhaften Ausführungsform einer neuen Verpackungsmaschine 1 in einer ersten Aufnahmestellung.

Die Verpackungsmaschine 1 dient zum Verpacken von Produkten 2, die als in Primärverpackungen enthaltene pharmazeutische Erzeugnisse ausgebildet sind, in einer Sekundärverpackung. Bei den pharmazeutischen Erzeugnissen handelt es sich insbesondere um Tabletten, Kapseln, Pillen, Spritzen, Ampullen, Fläschchen, pulverförmige oder flüssige Arzneimittel. Bei den Primärverpackungen handelt es sich im dargestellten Beispiel um Blisterverpackungen. Es könnte sich aber auch um eine andere Art von Primärverpackungen handeln.

Es ist nur ein Teil der Verpackungsmaschine 1 dargestellt. Es versteht sich, dass die Verpackungsmaschine 1 stromaufwärts und stromabwärts weitere Bauteile aufweist. Dabei handelt es sich insbesondere stromaufwärts um Bauteile zum Einbringen der pharmazeutischen Erzeugnisse in die Primärverpackungen. Bei den Bauteilen stromabwärts handelt es sich insbesondere um eine Vorrichtung zum Einbringen der gestapelten Produkte 2 in Sekundärverpackungen, insbesondere Faltschachteln.

Die Verpackungsmaschine 1 weist im vorliegend dargestellten Beispiel zwei erste Fördereinrichtungen auf, nämlich eine erste Fördereinrichtung 3 und eine weitere erste Fördereinrichtung 4. Die ersten Fördereinrichtungen 3, 4 - die auch als Zuführförderer bezeichnet werden können - weisen jeweils eine Vielzahl von Produktaufnahmen 5 auf, in denen die Produkte 2 in vereinzelter

Form in Richtung einer ersten Förderrichtung 6 transportiert werden. Die ersten Fördereinrichtungen 3, 4 sind jeweils als umlaufend angetriebenes Förderband ausgebildet, welches getaktet angetrieben ist. Die ersten Fördereinrichtungen 3, 4 weisen dabei separate Antriebe (nicht dargestellt) auf, so dass sie unabhängig voneinander angetrieben werden.

Mit den ersten Fördereinrichtungen 3, 4 werden nur ordnungsgemäße Produkte 2 gefördert. Fehlerhafte Produkte wurden stromaufwärts bereits ausgesondert.

Somit gelangt die jeweilige erste Fördereinrichtung 3, 4 bei der taktweisen Fortbewegung in der ersten Förderrichtung 6 mit den gefüllten Produktaufnahmen 5 in den Bereich einer oberhalb der ersten Fördereinrichtungen 3, 4 angeordneten Zwischenablageeinrichtung 7. Die Zwischenablageeinrichtung 7 dient zum Schaffen eines Puffers zwischen den soeben beschriebenen getaktet angetriebenen ersten Fördereinrichtungen 3, 4 und der unterhalb beschriebenen kontinuierlich angetriebenen zweiten Fördereinrichtung 13.

Die Zwischenablageeinrichtung 7 ist am besten in Fig. 3 erkennbar. Die Zwischenablageeinrichtung 7 weist eine Hubvorrichtung 8 auf. Mit der Hubvorrichtung 8 werden auf den ersten Fördereinrichtungen 3, 4 in den Produktaufnahmen 5 liegende Produkte 2 nach oben transportiert. Hierfür weist die Hubvorrichtung 8 einen Halter 14 und einen Schlitten 9 auf, der mittels eines Pleuels (nicht dargestellt) nach oben und unten changierend angetrieben ist.

In Fig. 3 ist die obere Position des Schlittens 9 dargestellt. Im Rahmen der Bewegung des Schlittens 9 von der unteren Position in die obere Position erfolgt eine Drehung der schwenkbar gelagerten Achse 10 der Hubvorrichtung 8. An der Achse 10 sind Fingerelemente 11 angeordnet, die im Rahmen der Bewegung des Schlittens 9 von unten nach oben in Richtung der Produkte 2 verschwenken. Dadurch greifen die Fingerelemente 11 an gegenüberliegenden Seiten eines Produkts 2 an und heben dieses um einen Weg an, der mindestens der Höhe des Produkts 2 entspricht. Hierdurch gelangen die Produkte 2 in die Position der oberen in Fig. 3 dargestellten Produkte 2.

Die Verpackungsmaschine 1 weist weiterhin eine Übergabevorrichtung 12 auf, mit der die Produkte 2 aus der Zwischenablageeinrichtung 7 entnommen und auf einer zweiten Fördereinrichtung 13 abgelegt werden. Die Zwischenablageeinrichtung 7 ist zweibahnig ausgebildet und weist somit eine erste Bahn 15 und eine zweite Bahn 16 auf. Die erste Bahn 15 ist der ersten Fördereinrichtung 3 und die zweite Bahn 16 der zweiten Fördereinrichtung 4 zugeordnet.

Die Übergabevorrichtung 12 ist hier als Roboter mit einer dreiachsigen Bewegungsbahn ausgebildet. Die Übergabevorrichtung 12 weit einen Unterdrucksaugerarm 17 mit einer Mehrzahl von den Produkten 2 zugeordneten Unterdrucksaugern auf.

In den Fig. 1-4 ist eine erste Aufnahmeposition der Übergabevorrichtung 12 dargestellt. Die Übergabevorrichtung 12 entnimmt in dieser Position eine Reihe von Produkten 2, die von der ersten Fördereinrichtung 3 stammen und sich nun in der ersten Bahn 15 der Zwischenablageeinrichtung 7 befinden.

In den **Fig. 5-8** sind entsprechende Ansichten einer zweiten Aufnahmeposition der Übergabevorrichtung 12 dargestellt. In diesem Fall entnimmt diese eine Reihe von Produkten 2, die aus der ersten Fördereinrichtung 4 stammen und sich in der zweiten Bahn 16 der Zwischenablageeinrichtung 7 befinden.

In den **Fig. 9-12** sind entsprechende Ansichten einer dritten Position der Übergabevorrichtung 12 dargestellt. In diesem Fall handelt es sich um eine erste Ablegeposition zu Beginn der Bildung von Stapeln von Produkten 2 auf der zweiten Förderreinrichtung 13. Die zweite Förderreinrichtung 13 ist ebenfalls als umlaufend angetriebenes Förderband mit einem eigenen Antrieb (nicht dargestellt) ausgebildet. Die zweite Förderreinrichtung 13 wird aber nicht getaktet, sondern im Wesentlichen kontinuierlich angetrieben. Anstelle von Produktaufnahmen für vereinzelte Produkte 2 weist die zweite Förderreinrichtung 13 eine Mehrzahl von Stapelkassetten 18 zur Aufnahme von Stapeln von Produkten 2 auf. In der in den Fig. 9-12 gezeigten erste Ablegeposition werden Produkte 2 durch die Übergabevorrichtung 12 in einem Teil der Stapelkassetten 18 abgelegt. Die Produkte 2 sind dabei jeweils das erste Produkt 2 in ihrem Stapel.

In den **Fig. 13-16** sind entsprechende Ansichten einer weiteren Position der Übergabevorrichtung 12 dargestellt. In diesem Fall handelt es sich um eine zweite Ablegeposition, in der eine Reihe von Stapeln von Produkten 2 in den Stapelkassetten 18 finalisiert wird. Es wird also das jeweils letzte Produkt 2 auf dem Stapel gelegt.

Die neue Verpackungsmaschine 1 wird beispielsweise wie folgt betrieben:
Mit den beiden ersten Fördereinrichtungen 3, 4 werden Produkte 2 im Einzeltakt in den Bereich unterhalb der Zwischenablageeinrichtung 7 gefördert. Sobald die Anzahl der Produkte 2 unter der Zwischenablageeinrichtung 7 mit der Anzahl der Aufnahmeplätze in der Zwischenablageeinrichtung 7 übereinstimmt, wird die Hubvorrichtung 8 betätigt. Die Fingerelemente 11 fahren nach unten und greifen die Reihe von Produkten 2 während einer kurzen Stillstandsphase der jeweiligen ersten Fördereinrichtung 3 oder 4. Dabei werden die Produkte 2 aus den Produktaufnahmen 5 herausgehoben.

In dieser angehobenen Position verbleibt die Reihe von Produkten 2 so lange in der Zwischenablageeinrichtung 7, bis die Übergabevorrichtung 12 die Produkte 2 greift und in Richtung der kontinuierlich angetriebenen zweiten Fördereinrichtung 13 transportiert.

Dort werden die Produkte 2 bei fortlaufender Bewegung der zweiten Fördereinrichtung 13 in deren Stapelkassetten 18 abgelegt.

Für das Aufnehmen und Ablegen der Produkte 2 bleibt der Übergabevorrichtung 12 maximal n Mal die Taktzeit des Einzeltakts der jeweiligen ersten Fördereinrichtung 3, 4.

Im Falle einer Störung im Materialfluss - beispielsweise aufgrund von fehlerhaften Produkten - wird die Geschwindigkeit der kontinuierlich angetriebenen zweiten Fördereinrichtung 13 reduziert. Dadurch können die Stapel von Produkten 2 in der erforderlichen Weise weiter aufgebaut werden.

Bei einer Stapelhöhe von kleiner oder gleich zwei Produkten 2 und einer zweibahnigen Ausführung der Zwischenablageeinrichtung 7 muss die Fördergeschwindigkeit der zweiten Fördereinrichtung 13 nicht reduziert werden. Stattdessen können einige Stapelkassetten 18 der zweiten Fördereinrichtung 13 leer bleiben.

Bei einer Stapelhöhe von kleiner oder gleich zwei Produkten 2 und einer einbahnigen Ausführung der Zwischenablageeinrichtung 7 muss die Fördergeschwindigkeit der zweiten Fördereinrichtung 13 ebenfalls nicht reduziert werden. Auch in diesem Fall können einige Stapelkassetten 18 der zweiten Fördereinrichtung 13 leer bleiben.

Grundsätzlich wird die zweite Fördereinrichtung kontinuierlich mit konstanter Geschwindigkeit angetrieben. Es erfolgt jedenfalls kein getakteter Antrieb. Unter einem solchen kontinuierlichen Antrieb ist auch eine zwischenzeitliche Reduzierung der Geschwindigkeit der zweiten Fördereinrichtung aufgrund von Störungen im Zuführprozess von Produkten 2 zu verstehen. Zu einer solchen Reduzierung gehört auch ein kurzzeitiger vollständiger Stillstand der zweiten Fördereinrichtung.

### BEZUGSZEICHENLISTE

- 1: Verpackungsmaschine
- 2: Produkt
- 3: Erste Fördereinrichtung
- 4: Erste Fördereinrichtung
- 5: Produktaufnahme
- 6: Erste Förderrichtung
- 7: Zwischenablageeinrichtung
- 8: Hubvorrichtung
- 9: Schlitten
- 10: Achse
- 11: Fingerelement
- 12: Übergabevorrichtung
- 13: Zweite Fördereinrichtung
- 14: Halter
- 15: Erste Bahn
- 16: Zweite Bahn
- 17: Unterdrucksaugerarm
- 18: Stapelkassette

## Patentansprüche

1. Verpackungsmaschine (1) für Produkte (2), die als in Primärverpackungen enthaltene pharmazeutische Erzeugnisse ausgebildet sind, mit
einer getaktet angetriebenen ersten Fördereinrichtung (3, 4), mit der vereinzelte Produkte (2) gefördert werden,
einer stromabwärts der ersten Fördereinrichtung (3, 4) angeordneten und kontinuierlich angetriebenen zweiten Fördereinrichtung (13), die als Stapelbildungseinrichtung ausgebildet ist und mit der Stapel von Produkten (2) gefördert werden, **gekennzeichnet durch**
eine Zwischenablageeinrichtung (7), in der von der ersten Fördereinrichtung (3, 4) stammende Produkte (2) zwischengelagert werden, und
eine Übergabevorrichtung (12), mit der die Produkte (2) aus der Zwischenablageeinrichtung (7) entnommen und zur Bildung der Stapel von Produkten (2) auf der zweiten Fördereinrichtung (13) abgelegt werden.

2. Verpackungsmaschine (1) nach Anspruch 1, **dadurch gekennzeichnet, dass** die Zwischenablageeinrichtung (7) oberhalb der ersten Fördereinrichtung (3, 4) angeordnet ist.

3. Verpackungsmaschine (1) nach Anspruch 2, **dadurch gekennzeichnet, dass** die Zwischenablageeinrichtung (7) eine Hubvorrichtung (8) aufweist, mit der Produkte (2) von der ersten Fördereinrichtung (3, 4) nach oben transportiert werden.

4. Verpackungsmaschine (1) nach Anspruch 2 oder 3, **dadurch gekennzeichnet, dass** die Hubvorrichtung (8) Fingerelemente (11) aufweist, die an gegenüberliegenden Seiten eines Produkts (2) angreifen und dieses um einen Weg anheben, der mindestens der Höhe des Produkts (2), insbesondere plus zwischen 5 mm und 50 mm, entspricht.

5. Verpackungsmaschine (1) nach Anspruch 4, **dadurch gekennzeichnet, dass** die Fingerelemente (11) so ausgebildet und angeordnet sind, dass sie die Produkte (2) bezüglich ihrer Position zueinander in mindestens einer Raumrichtung ausrichten.

6. Verpackungsmaschine (1) nach mindestens einem der Ansprüche 3 bis 5, **dadurch gekennzeichnet, dass** die Hubvorrichtung (8) getaktet angetrieben ist.

7. Verpackungsmaschine (1) nach mindestens einem der vorhergehenden Ansprüche, **gekennzeichnet durch** zwei getaktet angetriebene erste Fördereinrichtungen (3, 4), die insbesondere unabhängig voneinander angetrieben sind.

8. Verpackungsmaschine (1) nach Anspruch 7, **dadurch gekennzeichnet, dass** die Zwischenablageeinrichtung (7) eine erste Bahn (15) und eine zweite Bahn (16) aufweist, wobei die erste Bahn (15) der einen ersten Fördereinrichtung (3) und die zweite Bahn (16) der anderen ersten Fördereinrichtung (4) zugeordnet ist.

9. Verpackungsmaschine (1) nach mindestens einem der vorhergehenden Ansprüche, **dadurch gekennzeichnet, dass** nur genau eine Übergabevorrichtung (12) vorhanden ist.

10. Verpackungsmaschine (1) nach mindestens einem der vorhergehenden Ansprüche, **dadurch gekennzeichnet, dass** die Zwischenablageeinrichtung (7) unmittelbar im Anschluss an die erste Fördereinrichtung (3, 4) stromabwärts angeordnet ist.

11. Verpackungsmaschine (1) nach mindestens einem der vorhergehenden Ansprüche, **dadurch gekennzeichnet, dass** die Übergabevorrichtung (12) einen Unterdrucksaugerarm (17) mit einer Mehrzahl von Unterdrucksaugern aufweist.

12. Verpackungsmaschine (1) nach mindestens einem der vorhergehenden Ansprüche, **dadurch gekennzeichnet, dass** die Übergabevorrichtung (12) als Roboter mit einer dreiachsigen Bewegungsbahn ausgebildet ist.

13. Verpackungsmaschine (1) nach mindestens einem der vorhergehenden Ansprüche, **weiterhin gekennzeichnet durch** eine Speichervorrichtung für Produkte (2), wobei die Speichervorrichtung
oberhalb der ersten Fördereinrichtung (3, 4) angeordnet ist,
manuell oder automatisch mit Produkten (2) befüllbar ausgebildet ist, und
zum Zuführen der Produkte (2) in Produktaufnahmen (5) der ersten Fördereinrichtung (3, 4) ausgebildet ist.

14. Verpackungsmaschine (1) nach mindestens einem der vorhergehenden Ansprüche, **dadurch gekennzeichnet, dass** Verpackungsmaschine (1) als Blisterstreifenverpackungsmaschine (1) ausgebildet ist und die Primärverpackungen Blisterverpackungen sind.

15. Automatisiertes maschinelles Verfahren zum Verpacken von Produkten (2), die als in Primärverpackungen enthaltene pharmazeutische Erzeugnisse ausgebildet sind, in Sekundärverpackungen, insbesondere mit einer Verpackungsmaschine (1) nach mindestens einem der vorhergehenden Ansprüche, mit den Schritten:
Fördern vereinzelter Produkte (2) mit einer getaktet angetriebenen ersten Fördereinrichtung (3, 4),
Entnehmen der Produkte (2) von der ersten Fördereinrichtung (3, 4) mittels einer Hubvorrichtung (8) einer Zwischenablageeinrichtung (7) zum Ablegen der Produkte (2) in der Zwischenablageeinrichtung (7),
Entnehmen der Produkte aus der Zwischenablageeinrichtung (7) mittels einer Übergabevorrichtung (12),
Ablegen der Produkte (2) auf einer kontinuierlich angetriebenen zweiten Fördereinrichtung (13) zur Bildung von Stapeln von Produkten (2), und
Einbringen der Stapel von Produkten (2) in Sekundärverpackungen, insbesondere Faltschachteln.

## Claims

1. A packaging machine (1) for products (2) being designed as pharmaceutical products being contained in primary packages, comprising:
a first conveyor unit (3, 4) being driven in a clocked manner with which separated products (2) are conveyed,
a second conveyor unit (13) being arranged upstream of the first conveyor unit (3, 4) and being continuously driven, the second conveyor unit (13) being designed as a stack forming unit with which stacks of products (2) are conveyed, **characterised by**
an intermediate storage unit (7) in which the products (2) originating from the first conveyor unit (3, 4) are temporarily stored, and
a transfer apparatus (12) with which the products (2) are removed from the intermediate storage unit (7) and put on the second conveyor unit (13) to form the stacks of products (2).

2. The packaging machine (1) of claim 1, **characterised in that** the intermediate storage unit (7) is arranged above the first conveyor unit (3, 4).

3. The packaging machine (1) of claim 2, **characterised in that** the intermediate storage unit (7) includes a lifting apparatus (8) with which the products (2) from the first conveyor unit (3, 4) are transported upwardly.

4. The packaging machine (1) of claim 2 or 3, **characterized in that** the lifting apparatus (8) includes finger elements (11) engaging at opposite sides of a product (2) and lifting this product (2) by a distance corresponding to at least the height of the product (2), especially plus between 5 mm and 50 mm.

5. The packaging machine (1) of claim 4, **characterized in that** the finger elements (11) are designed and arranged such that they align the products (2) regarding their position with respect to one another in at least one direction in space.

6. The packaging machine (1) of at least one of claims 3 to 5, **characterized in that** the lifting apparatus (8) is driven in a clocked manner.

7. The packaging machine (1) of at least one of the preceding claims, **characterized by** two first conveyor units (3, 4) being driven in a clocked manner and especially being driven independently from one another.

8. The packaging machine (1) of claim 7, **characterized in that** the intermediate storage unit (7) includes a first track (15) and a second track (16), the first track (15) being associated with one of the first conveyor units (3) and the second track (16) being associated with the other first conveyor unit (4).

9. The packaging machine (1) of at least one of the preceding claims, **characterized in that** there only is exactly one transfer apparatus (12).

10. The packaging machine (1) of at least one of the preceding claims, **characterized in that** the intermediate storage unit (7) is arranged downstream directly next to the first conveyor apparatus (3, 4).

11. The packaging machine (1) of at least one of the preceding claims, **characterized in that** the transfer apparatus (12) includes a negative pressure suction arm (7) including a plurality of negative pressure suction devices.

12. The packaging machine (1) of at least one of the preceding claims, **characterized in that** the transfer apparatus (12) is designed as a robot having a triaxial movement path.

13. The packaging machine (1) of at least one of the preceding claims, **further characterized by** a storage apparatus for the products (2), the storage apparatus
being arranged above the first conveyor apparatus (3, 4),
being designed to be manually or automatically fillable with the products (2), and
being designed to feed the products (2) into product receptions (5) of the first conveyor apparatus (3, 4).

14. The packaging machine (1) of at least one of the preceding claims, **characterized in that** the packaging machines (1) is designed as a blister strip packaging machine (1) and the primary packages are blister packages.

15. Automated mechanical method of packing products (2) being designed as pharmaceutical products being contained in primary packages in secondary packages, especially with a packaging machine (1) of at least one of the preceding claims, comprising the steps of:
conveying separated products (2) with a first conveyor apparatus (3, 4) being driven in a clocked manner,
removing the products (2) from the first conveyor apparatus (3, 4) by a lifting apparatus (8) of an intermediate storage unit (7) for putting the products (2) in the intermediate storage unit (7),
removing the products from the intermediate storage unit (7) by a transfer apparatus (12),
putting the products (2) on a continuously driven second conveyor apparatus (13) to form stacks of products (2), and
inserting the stacks of products (2) into secondary packages, especially folding boxes.

## Revendications

1. Machine d'emballage (1) pour des produits (2) qui se présentent sous la forme de produits pharmaceutiques contenus dans des emballages primaires, avec
un premier dispositif de convoyage (3, 4), entraîné de manière cadencée, avec lequel les produits (2) séparés sont convoyés,
un deuxième dispositif de convoyage (13), disposé en aval du premier dispositif de convoyage (3, 4) et entraîné en continu, qui est conçu comme un dispositif de formation de piles et avec lequel des piles de produits (2) sont convoyées, **caractérisée par**
un dispositif d'entreposage (7), dans lequel les produits (2) provenant du premier dispositif de convoyage (3, 4) sont entreposés et
un dispositif de transfert (12), avec lequel les produits (2) sont prélevés dans le dispositif d'entreposage (7) et sont posés, pour la formation des piles de produits (2), sur le deuxième dispositif de convoyage (13).

2. Machine d'emballage (1) selon la revendication 1, **caractérisée en ce que** le dispositif d'entreposage (7) est disposé au-dessus du premier dispositif de convoyage (3, 4).

3. Machine d'emballage (1) selon la revendication 2, **caractérisée en ce que** le dispositif d'entreposage (7) comprend un dispositif de levage (8) avec lequel les produits (2) sont transportés du premier dispositif de convoyage (3, 4) vers le haut.

4. Machine d'emballage (1) selon la revendication 2 ou 3, **caractérisée en ce que** le dispositif de levage (8) comprend des éléments de doigts (11) qui s'engagent sur des côtés opposés d'un produit (2) et soulèvent celui-ci d'une distance qui correspond au moins à la hauteur du produit (2), notamment plus 5 mm et 50 mm.

5. Machine d'emballage (1) selon la revendication 4, **caractérisée en ce que** les éléments de doigts (11) sont conçus et disposés de façon à ce que qu'ils orientent les produits (2), en ce qui concerne leur position entre eux, dans au moins une direction de l'espace.

6. Machine d'emballage (1) selon au moins l'une des revendications 3 à 5, **caractérisée en ce que** le dispositif de levage (8) est entraîné de manière cadencée.

7. Machine d'emballage (1) selon au moins l'une des revendications précédentes, **caractérisée par** deux premiers dispositifs de convoyage (3, 4) entraînés de manière cadencée, qui sont entraînés plus particulièrement de manière indépendante entre eux.

8. Machine d'emballage (1) selon la revendication 7, **caractérisée en ce que** le dispositif d'entreposage (7) comprend une première piste (15) et une deuxième piste (16), la première piste (15) correspondant à un premier dispositif de convoyage (3) et la deuxième piste (16) correspondant à l'autre premier dispositif de convoyage (4).

9. Machine d'emballage (1) selon au moins l'une des revendications précédentes, **caractérisée en ce qu'**exactement un dispositif de transfert (12) seulement est prévu.

10. Machine d'emballage (1) selon au moins l'une des revendications précédentes, **caractérisée en ce que** le dispositif d'entreposage (7) est disposé en aval directement dans le prolongement du premier dispositif de convoyage (3, 4).

11. Machine d'emballage (1) selon au moins l'une des revendications précédentes, **caractérisée en ce que** le dispositif de transfert (12) comprend un bras d'aspiration à dépression (17) avec une pluralité d'aspirateurs à dépression.

12. Machine d'emballage (1) selon au moins l'une des revendications précédentes, **caractérisée en ce que** le dispositif de transfert (12) est conçu comme un robot avec une trajectoire de déplacement sur trois axes.

13. Machine d'emballage (1) selon au moins l'une des revendications précédentes, **caractérisée en outre par** un dispositif de stockage pour les produits (2), le dispositif de stockage
étant disposé au-dessus du premier dispositif de convoyage (3, 4),
étant conçu de façon à pouvoir être rempli manuellement ou automatiquement avec des produits (2) et
étant conçu pour l'introduction des produits (2) dans des logements de produits (5) du premier dispositif de convoyage (3, 4).

14. Machine d'emballage (1) selon au moins l'une des revendications précédentes, **caractérisée en ce que** la machine d'emballage (1) est conçue comme une machine d'emballage à bande de blisters (1) et les emballages primaires sont des emballages à blisters.

15. Procédé mécanique automatisé pour l'emballage de produits (2), qui se présentent sous la forme de produits pharmaceutiques contenus dans des emballages primaires, dans des emballages secondaires, plus particulièrement avec une machine d'emballage (1) selon au moins l'une des revendications précédentes, avec les étapes suivantes:
convoyage des produits (2) séparés avec un premier dispositif de convoyage (3, 4) entraîné de manière cadencée,
prélèvement des produits (2) sur le premier dispositif de convoyage (3, 4) au moyen d'un dispositif de levage (8) d'un dispositif d'entreposage (7) pour la pose des produits (2) dans le dispositif d'entreposage (7),
prélèvement des produits dans le dispositif d'entreposage (7) au moyen d'un dispositif de transfert (12),
pose des produits (2) sur un deuxième dispositif de convoyage (13) entraîné en continu pour la formation de piles de produits (2) et
introduction des piles de produits (2) dans des emballages secondaires, plus particulièrement des boîtes pliables.
